# EUROPÄISCHE PATENTSCHRIFT

(11) **EP 4 453 438 B1**
(45) Veröffentlichungstag und Bekanntmachung des Hinweises auf die Patenterteilung: **07.05.2025**
(21) Anmeldenummer: 22843686.1
(22) Anmeldetag: 21.12.2022
(51) Int. Cl.: F16B 45/00

(54) **VERBINDUNGSMITTEL, VERSTÄRKUNGSEINRICHTUNG, VERBINDUNGSANORDNUNG SOWIE EIN VERFAHREN ZUM ANORDNEN VON BAUTEILEN**
CONNECTING MEANS, REINFORCING DEVICE, CONNECTING ASSEMBLY, AND METHOD FOR POSITIONING COMPONENTS
MOYEN DE CONNEXION, DISPOSITIF DE RENFORCEMENT, ENSEMBLE DE CONNEXION ET PROCÉDÉ DE POSITIONNEMENT DE COMPOSANTS

(30) Priorität: 21.12.2021 DE 102021134159
(43) Veröffentlichungstag der Anmeldung: 30.10.2024
(73) Patentinhaber: B.T. Innovation GmbH, 39116 Magdeburg (DE)
(72) Erfinder: VON LIMBURG, Felix, 39116 Magdeburg (DE)
(74) Vertreter: Grünecker Patent- und Rechtsanwälte PartG mbB
(86) Internationale Anmeldenummer: PCT/EP2022/087267
(87) Internationale Veröffentlichungsnummer: WO 2023/118315

(56) Entgegenhaltungen:
- WO-A1-2016/140673
- DE-U1- 29 918 024
- JP-A- H1 136 484
- US-A1- 2019 048 532
- US-B1- 11 167 957

## Beschreibung

Die vorliegende Erfindung betrifft ein Verbindungsmittel, eine Verbindungsanordnung sowie ein Verfahren zum Anordnen von Bauteilen.

WO 2016/140 673 A1 offenbart ein Verbindungsmittel, das zumindest nicht die Merkmale des kennzeichnenden Teils von Anspruch 1 zeigt.

Aus der DE 83 32 560 U1 ist ein Verbindungsmittel gemäß dem Oberbegriff des Anspruchs 1 bekannt. Insbesondere wird darin ein Spannschloss als Verbindungsmittel offenbart, das zwei Spanneinrichtungen als Anschlusseinrichtungen aufweist, die mit Bauteilen verbunden werden können. Weiterhin sind die Spanneinrichtungen jeweils an eine Koppeleinrichtung gekoppelt, die kettengliedartig verbundene Spannhülsen umfasst. Die Spanneinrichtungen umfassen jeweils eine Gewindeeinrichtung, die zum Spannen jeweils in eine Spannhülse verschraubt wird.

Dabei muss in den Spannhülsen jedoch genug Platz vorgesehen werden, um die jeweiligen Gewindeeinrichtungen in die Spannhülse, also in Richtung der Koppeleinrichtung einschrauben zu können. Der benötigte Platz macht das Verbindungsmittel ausladend. Weiterhin kann bei tief eingeschraubter Gewindeeinrichtung das Verbindungsmittel nur schwierig an der Verbindungseinrichtung betätigt werden.

Der vorliegenden Erfindung liegt deshalb die Aufgabe zugrunde ein kompaktes und leicht handhabbares Verbindungsmittel vorzusehen sowie die Verbindung und Handhabung der Bauteile zu verbessern.

Diese Aufgabe wird gelöst durch ein Verbindungsmittel nach Anspruch 1.

Gemäß einem ersten Aspekt wird ein Verbindungsmittel zum Verbinden von zumindest zwei entlang einer axialen Richtung des Verbindungsmittels beabstandeten Bauteilen, insbesondere Betonfertigteile, vorgesehen, wobei das Verbindungsmittel umfasst: zumindest zwei Anschlusseinrichtungen, über die das Verbindungsmittel jeweils an einem der zumindest zwei Bauteile anbringbar ist, und eine Koppeleinrichtung, die die zumindest zwei Anschlusseinrichtungen zumindest zur Übertragung von Zugkräften aneinander koppelt.

Von der DE 83 32 560 U1 unterscheidend ist zumindest eine der Anschlusseinrichtungen an einen Kopplungsabschnitt der Koppeleinrichtung zumindest in Bezug auf die axiale Richtung festgelegt gekoppelt.

Während die Gewindeeinrichtung im Stand der Technik entlang der axialen Richtung der Anschlusseinrichtung mit einer Drehung beweglich ist und deswegen der oben erwähnte Platz vorgesehen werden muss, bewegt sich die zumindest eine Anschlusseinrichtung gemäß dem ersten Aspekt nicht entlang der axialen Richtung der Anschlusseinrichtung. Deshalb muss kein Platz zum axialen Verschieben der zumindest einen Anschlusseinrichtung vorgesehen werden. Somit kann das Verbindungsmittel als solches kompakt gehalten werden. Weiterhin kann eine Betätigungseinrichtung leicht an der und/oder in der Koppeleinrichtung ansetzen, um das Verbindungsmittel zu betätigen. Insbesondere ist die zumindest Anschlusseinrichtung selbst bei Betätigung axial an dem Kopplungsabschnitt festgelegt.

Vorzugsweise sind die zumindest zwei Anschlusseinrichtungen jeweils an einen Kopplungsabschnitt der Koppeleinrichtung zumindest in Bezug auf die axiale Richtung festgelegt gekoppelt.

Somit kann jede der Anschlusseinrichtungen platzsparend an die Koppeleinrichtung gekoppelt werden. Kompaktheit und Handhabung des Verbindungsmittels lassen sich so weiterhin verbessern.

Vorzugsweise ist die zumindest eine Anschlusseinrichtung zumindest zur Anbringung an das jeweilige Bauteil beweglich an den jeweiligen Kopplungsabschnitt gekoppelt, weiterhin vorzugsweise um insbesondere mindestens 90°, nochmals bevorzugt frei, um die axiale Richtung drehbar an den jeweiligen Kopplungsabschnitt gekoppelt.

Dadurch kann die Anbringung an das jeweilige Bauteil erleichtert werden. So kann beispielsweise eine Gewindeeinrichtung der Anschlusseinrichtung durch Drehung um die axiale Richtung an dem Bauteil angebracht werden. Ebenso können Toleranzen leichter ausgeglichen werden. Dabei kann der jeweilige Kopplungsabschnitt beispielsweise auch ein Langloch, vorzugsweise quer zur axialen Richtung, aufweisen.

Gemäß einem weiteren Aspekt umfasst die zumindest eine Anschlusseinrichtung ein Befestigungsmittel in Form einer Gewindeeinrichtung , die an dem jeweiligen Bauteil verschraubbar ist.

Die Anschlusseinrichtung wird von dem Befestigungsmittel gebildet. Durch das Befestigungsmittel kann das Verbindungsmittel direkt an dem jeweiligen Bauteil angebracht werden. Ein Befestigungsmittel ist insbesondere dadurch gekennzeichnet, dass es direkt durch Formschluss und/oder Kraftschluss an dem Bauteil anbringbar ist. Mit anderen Worten braucht es keine Zusatzmittel zur Anbringung. Beispiele für Befestigungsmittel sind Gewinde, Nieten, Bajonettelemente und so weiter. Durch die Gewindeeinrichtung kann das Verbindungsmittel auf einfache Weise verspannt werden. Dabei wird vorzugsweise ein Gewindeabschnitt der Gewindeeinrichtung direkt in das jeweilige Bauteil verschraubt. Somit kann die Konfiguration weiterhin kompakt gehalten werden, während im Stand der Technik weitere Elemente auf einer bauteilnahen Seite der Gewindeeinrichtung zur Anbringung an das Bauteil vorgesehen sind.

Vorzugsweise weisen die zumindest zwei Anschlusseinrichtungen eine Gewindeeinrichtung gleicher Gangart, vorzugsweise ein Rechtsgewinde, auf.

Alternativ kann zumindest eine Anschlusseinrichtung eine Gewindeeinrichtung mit rechtsgängigem Gewinde und zumindest eine andere Anschlusseinrichtung eine Gewindeeinrichtung mit einem linksgängigen Gewinde aufweisen.

Im Fall gleicher Gangart der Gewinde ist die Gestaltung der Bauteile einfach, wobei die jeweilige Anschlusseinrichtung individuell betätigt werden kann. Im anderen Fall kann eine Verspannung des Verbindungsmittels und/oder eine Anbringung an das jeweilige Bauteil auf synchrone Weise geschehen. Insbesondere kann durch Drehung an der Koppeleinrichtung die Verspannung und/oder die Anbringung an beiden Bauteilen erfolgen.

Gemäß noch einem weiteren Aspekt kann der jeweilige Kopplungsabschnitt einen Öffnungsabschnitt aufweisen, der sich vorzugsweise entlang der axialen Richtung erstreckt und durch den zumindest ein Teil der zumindest einen Anschlusseinrichtung, vorzugsweise ein Wellenabschnitt der Gewindeeinrichtung, verläuft.

Dies erlaubt eine einfache Lagerung der Anschlusseinrichtung an dem Kopplungsabschnitt, wobei Kompaktheit in Axialrichtung und quer dazu sichergestellt werden kann. Gleichzeitig kann die Anschlusseinrichtung in dem Öffnungsabschnitt so gelagert sein, dass der bewegliche Freiheitsgrad gewahrt bleibt.

Vorzugsweise weist das Verbindungsmittel einen ersten Sperrabschnitt, insbesondere einen Schraubenkopf der jeweiligen Gewindeeinrichtung, auf einer ersten dem jeweiligen Bauteil bezüglich des Öffnungsabschnitts abgewandten Seite auf, der zumindest die Verschiebung der zumindest einen Anschlusseinrichtung zu dem jeweiligen Bauteil hin unterbindet, und/oder einen zweiten Sperrabschnitt auf einer zweiten dem jeweiligen Bauteil bezüglich des Öffnungsabschnitts zugewandten Seite auf, der zumindest die Verschiebung der zumindest einen Anschlusseinrichtung von dem jeweiligen Bauteil weg unterbindet.

Somit kann die Anschlusseinrichtung an dem Kopplungsabschnitt auf einfache Weise durch die Sperrabschnitte axial festgelegt werden. Wird ein Schraubenkopf als einer der Sperrabschnitte verwendet, kann der Montageaufwand und Komponentenzahl reduziert werden.

Vorzugsweise wird der erste und/oder zweite Sperrabschnitt von einem Ansatzabschnitt zur Betätigung der Anschlusseinrichtung gebildet.

Dadurch kann die Anschlusseinrichtung an dem Ansatzabschnitt betätigt werden und zugleich die axiale Festlegung sichergestellt werden. Somit kann die Größe des Verbindungsmittels klein gehalten werden und zusätzliche Komponenten vermieden werden. Insbesondere der Sperrabschnitt auf der bauteilnahen Seite kann durch den Ansatzabschnitt gebildet werden. Das erleichtert die Betätigung.

Gemäß noch einem weiteren Aspekt kann die Koppeleinrichtung so ausgestaltet sein, dass die zumindest zwei Anschlusseinrichtungen relativ zueinander beweglich sind, vorzugsweise die jeweiligen Kopplungsabschnitte zueinander beweglich sind, insbesondere kann die Koppeleinrichtung zumindest abschnittsweise druckweich und/oder biegeweich und/oder torsionsweich ausgestaltet sein.

Dadurch können Toleranzen und Ausrichtungsunterschiede der jeweiligen Bauteile und der jeweiligen Anschlusseinrichtungen kompensiert werden. Ebenso können die jeweiligen Bauteile sogar in einem Zustand, in dem das Verbindungsmittel über die jeweiligen Anschlusseinrichtungen angebracht ist, relativ zueinander bewegt werden.

Vorzugsweise sind die Positionen der zumindest zwei Anschlusseinrichtungen, insbesondere vorzugsweise der jeweiligen Kopplungsabschnitte, zueinander, insbesondere entlang der axialen Richtung beweglich, und/oder sind die Ausrichtung der beiden Anschlusseinrichtungen, vorzugsweise der jeweiligen Kopplungsabschnitte, zueinander veränderlich.

Dadurch können die Bauteile aufeinander zubewegt werden und/oder Abweichungen von Bauteilanbringungsabschnitten, an denen die Anschlusseinrichtungen jeweils anzubringen sind, zueinander ausgeglichen werden.

Gemäß noch einem weiteren Aspekt weist die Koppeleinrichtung zumindest drei Kettenglieder auf, die vorzugsweise hinterschneidend und/oder gelenkig gekoppelt sind, und weist ein Kettenglied den Kopplungsabschnitt auf, wobei die Koppeleinrichtung weiterhin bevorzugt zumindest ein reversibel zugängliches Kettenglied umfasst, in das zumindest ein weiteres Kettenglied einkoppelbar ist, insbesondere bevorzugt ein Karabinerglied aufweist.

Durch das Kettenglied kann die Koppeleinrichtung kompakt ausgeführt werden, wobei insbesondere zu beiden Seiten in einer Erstreckungsrichtung des Kettenglieds ein Kopplungsabschnitt für die jeweilige Anschlusseinrichtung vorgesehen werden kann. Das Kettenglied kann auch einfach betätigt werden, beispielsweise kann das Kettenglied zur Anbringung der Anschlusseinrichtungen verdreht werden. Wird eine Vielzahl von wie oben spezifiziert angeordneten Kettengliedern vorgesehen, kann die Koppeleinrichtung flexibel ausgestaltet werden. Mit zumindest einem reversibel zugänglichen Kettenglied können auf einfache Weise weitere Kettenglieder zur Anpassung an verschiedene Bauteilabstände hinzugefügt werden.

Gemäß noch einem weiteren Aspekt kann das Verbindungsmittel durch Verschrauben der zumindest einen Anschlusseinrichtung an dem jeweiligen Bauteil spannbar sein.

Somit kann auf einfache Weise eine Verspannung der Bauteile erfolgen und eine Zugbelastung auf die Koppeleinrichtung aufgebracht werden.

Alternativ oder zusätzlich können durch Verschrauben der zumindest einen Anschlusseinrichtung die zumindest zwei Anschlusseinrichtungen, insbesondere die jeweiligen Kopplungsabschnitte voneinander beabstandbar sein.

Während im Stand der Technik die Verschraubung der Gewindeeinrichtungen an der Koppeleinrichtung die Anschlusseinrichtungen aufeinander zu bewegt, kann gemäß diesem Aspekt die Koppeleinrichtung kompakt ausgestaltet werden, da kein Raum zur Aufnahme der Anschlusseinrichtungen vorgesehen werden muss.

Alternativ oder zusätzlich kann das Verbindungsmittel durch voneinander Beabstanden der Anschlusseinrichtungen spannbar sein.

Auch dadurch kann auf einfache Weise eine Verspannung der Bauteile erfolgen und eine Zugbelastung auf die Koppeleinrichtung aufgebracht werden.

Gemäß noch einem weiteren Aspekt kann die Koppeleinrichtung eine Kraftmesseinrichtung aufweisen, die eine auf die Koppeleinrichtung wirkende Kraft, vorzugsweise eine Zugkraft, messen kann.

Dies erlaubt eine einfache Bestimmung der auf das Verbindungsmittel wirkenden Zugkraft. Ebenso kann dadurch eine Verspannung der Bauteile genau eingestellt werden. Die Kraftmesseinrichtung kann insbesondere einen Anzeigeabschnitt aufweisen, an dem die wirkende Kraft ablesbar ist.

Gemäß noch einem weiteren Aspekt kann das Verbindungsmittel zumindest abschnittsweise, vorzugsweise vollständig aus Metall, nochmals vorzugsweise aus, insbesondere zugfestem, Stahl gefertigt sein.

Dadurch können die wirkenden Kräfte sicher zwischen den Bauteilen übertragen werden. Insbesondere die Koppeleinrichtung kann zumindest abschnittsweise aus den genannten Materialien gefertigt sein.

Ein anderer, als solcher nicht erfindungsgemäßer Aspekt der vorliegenden Offenbarung betrifft eine Verstärkungseinrichtung zur Lastübertragung zwischen zwei Bauteilen, umfassend: einen Basisabschnitt, der mittels einer Anschlusseinrichtung des Verbindungsmittels nach zumindest einem der vorangehenden Aspekte mit einem Anbringungsabschnitt an einem der Bauteile anbringbar ist, und einen Verstärkungsabschnitt, der an den Basisabschnitt gekoppelt ist und über den eine Last zwischen den Bauteilen übertragbar ist.

Durch eine solche Verstärkungseinrichtung kann die Kraftübertragung zwischen den beiden Bauteilen verbessert werden. Insbesondere kann eine stabile Verbindung über die Verstärkungseinrichtung geschaffen werden. Die Verstärkungseinrichtung kann weiterhin in einfacher Weise über das Verbindungsmittel der vorangehenden Aspekte, insbesondere über die Anschlusseinrichtung davon, an dem einen Bauteil angebracht werden.

Vorzugsweise weist der Anbringungsabschnitt einen Öffnungsabschnitt auf, durch den die eine Anschlusseinrichtung verlaufen kann.

Somit kann die Verstärkungseinrichtung in einfacher Weise und platzsparend an dem einen Bauteil angebracht werden und mit diesem gekoppelt werden, indem die Anschlusseinrichtung zumindest abschnittsweise durch den Öffnungsabschnitt verläuft, insbesondere wenn die Anschlusseinrichtung eine Gewindeeinrichtung aufweist, die durch den Öffnungsabschnitt in das eine Bauteil verschraubt wird. Dabei kann die Verstärkungseinrichtung, genauer, der Basisabschnitt gegen das eine Bauteil gepresst werden. Der Öffnungsabschnitt kann beispielsweise ein Durchgangsloch umfassen oder sein. Insbesondere kann der Öffnungsabschnitt zumindest ein Langloch, vorzugsweise zumindest zwei einander kreuzende Langlöcher, umfassen oder sein.

Alternativ oder zusätzlich kann der Verstärkungsabschnitt einstellbar an den Basisabschnitt gekoppelt sein.

Somit kann Verstärkungsabschnitt vor Ort entsprechend den Geometrien und der Anordnung der Bauteile in zumindest einem von Position und Orientierung eingestellt werden. Dazu kann die Verstärkungseinrichtung Einstellmittel umfassen, die beispielsweise zumindest ein Langloch in dem Basisabschnitt und/oder dem Verstärkungsabschnitt umfassen.

Insbesondere kann der Verstärkungsabschnitt in zumindest einer Richtung senkrecht zur axialen Richtung und/oder in der axialen Richtung der Anschlusseinrichtung, die die Verstärkungseinrichtung an das eine Bauteil koppelt, einstellbar an den Basisabschnitt gekoppelt sein.

Dadurch kann die Flexibilität weiter erhöht werden.

In der Verstärkungseinrichtung kann der Verstärkungsabschnitt weiterhin einen Druckbeanspruchungsabschnitt, der bei Lastübertragung im Wesentlichen auf Druck beansprucht wird, und/oder einen Zugbeanspruchungsabschnitt aufweisen, der bei Lastübertragung im Wesentlichen auf Zug beansprucht wird.

Somit kann die Verstärkungseinrichtung verschiedenen Belastungen gerecht werden.

Weiterhin kann der Verstärkungsabschnitt zumindest einen geraden Erstreckungsabschnitt, insbesondere Stababschnitt umfassen, der eine Kraft in seiner Erstreckungsrichtung übertragen kann.

Dadurch kann eine wohl definierte Kraftübertragung erreicht werden.

Zumindest ein gerader Erstreckungsabschnitt ist vorzugsweise im Wesentlichen parallel zu der axialen Richtung angeordnet und/oder zumindest ein gerader Erstreckungsabschnitt ist im Wesentlichen parallel zur Gravitationsrichtung angeordnet.

Somit kann einer bei axialer Beabstandung der Bauteile auftretenden Belastung durch Gravitationskräfte entsprochen werden.

Weiterhin erstreckt sich vorzugsweise ein gerader Erstreckungsabschnitt an einem von dem Basisabschnitt abgewandten Endabschnitt des parallel zur axialen Richtung angeordneten geraden Erstreckungsabschnitts in Richtung der Gravitationsrichtung und zur Seite des Basisabschnitts.

Dadurch kann eine durch Gravitationskräfte verursachte Belastung durch die Verstärkungseinrichtung gestützt werden. Insbesondere können Druckkräfte und Zugkräfte übertragen werden.

Weiterhin kann der Verstärkungsabschnitt in einer geschlossenen Form, insbesondere im Wesentlichen in einer Dreiecksform ausgebildet sein, vorzugsweise in der Form eines rechtwinkligen, insbesondere gleichschenkligen, Dreiecks.

Somit kann eine stabile Kraftübertragung ähnlich einem Fachwerk erreicht werden. Dabei kann die Dreiecksform von drei miteinander verbundenen geraden Erstreckungsabschnitten gebildet werden.

Weiterhin ist es bevorzugt, dass der Anbringungsabschnitt von einem Verstärkungsabschnittkopplungsabschnitt, an dem der Verstärkungsabschnitt an den Basisabschnitt gekoppelt ist, in einer Richtung senkrecht zur axialen Richtung der Anschlusseinrichtung beabstandet ist.

Somit kann die Anbringung der Verstärkungseinrichtung an dem einen Bauteil ohne Einschränkung durch den Verstärkungsabschnitt von statten gehen.

Ein weiterer Aspekt der vorliegenden Erfindung ist auf eine Verbindungsanordnung gerichtet, die umfasst: zumindest zwei Bauteile, vorzugsweise Betonfertigteile; und das Verbindungsmittel nach zumindest einem der vorangehenden Aspekte, wobei die eine Anschlusseinrichtung an einem der zumindest zwei Bauteile verschraubt ist, und die andere Anschlusseinrichtung an dem anderen der zumindest zwei Bauteile angebracht ist, vorzugsweise daran verschraubt ist.

Somit können die Bauteile durch das Verbindungsmittel zur Übertragung von Lasten aneinander gekoppelt werden. Die Bauteile können dabei insbesondere vorgespannt werden.

Vorzugsweise sind die zumindest zwei Bauteile bis auf das Verbindungsmittel frei beweglich aufeinander gelagert.

Somit dient das Verbindungsmittel als Sicherungsmittel. Das Verbindungsmittel kann somit verhindern, dass die Bauteile voneinander ohne Anbindung aneinander getrennt werden.

Die Verbindungsanordnung kann weiterhin die Verstärkungseinrichtung nach einem der obigen Aspekte umfassen, wobei der Basisabschnitt mittels der einen Anschlusseinrichtung an dem einen Bauteil angebracht ist und der Verstärkungsabschnitt zumindest abschnittsweise, vorzugsweise ganzheitlich, in einem, vorzugsweise axialen, Zwischenraum zwischen den Bauteilen angeordnet ist, und insbesondere bevorzugt der Zwischenraum mit einem Strukturanbindungsmittel, vorzugsweise umfassend Beton und/oder Mörtel, befüllt ist.

Somit kann über das Verbindungsmittel die Verstärkungseinrichtung in dem Zwischenraum, beispielsweise eine Fuge, vorgesehen werden und die Verbindung der Bauteile stabilisiert werden. Wird der Zwischenraum mit einem Strukturanbindungsmittel befüllt, kann insbesondere durch den ausgehärteten Beton und/oder Mörtel die Last zumindest teilweise in die Verstärkungseinrichtung eingebracht werden, die damit das Strukturanbindungsmittel verstärkt.

Vorzugsweise weist der Zwischenraum in axialer Richtung zumindest eine Hinterschneidung mit zumindest einem der Bauteile auf.

Somit kann durch die Bauteile eine Zuglast in den Zwischenraum eingebracht werden, die über die Verstärkungseinrichtung übertragen werden kann.

In der Verbindungsanordnung ist die Verstärkungseinrichtung vorzugsweise mit zumindest einem der oben spezifizierten Merkmalen angeordnet. Beispielsweise kann zumindest einer der geraden Erstreckungsabschnitte der Verstärkungseinrichtung in axialer Richtung ausgerichtet sein.

Alternativ oder zusätzlich kann einer der geraden Erstreckungsabschnitte der Verstärkungseinrichtung in einem Winkel, bevorzugt zwischen 30° und 60°, insbesondere von 45°, zur axialen Richtung ausgerichtet sein.

Das vereinfacht die Lastübertragung.

Zur Schaffung der obigen Verbindungsanordnung kann ein Verfahren vorgesehen werden, das die Schritte umfasst:
- Anordnen der Bauteile zueinander;
- Anbringen des Verbindungsmittels an den Bauteilen über die jeweiligen Anschlusseinrichtungen, wobei vorzugsweise die Verstärkungseinrichtung gemäß der obigen an eines der Bauteile gekoppelt wird;
- vorzugsweise Verspannen der Bauteile über das Verbindungsmittel; und
- weiterhin vorzugsweise Befüllen eines, insbesondere axialen, Zwischenraums zwischen den Bauteilen mit einem Strukturanbindungsmittel, vorzugsweise umfassend Beton und/oder Mörtel, wobei insbesondere bevorzugt der Verstärkungsabschnitt der Verstärkungseinrichtung in dem Zwischenraum angeordnet ist.

Die Schritte sind insbesondere in dieser Reihenfolge durchzuführen, wobei am Ende das Strukturanbindungsmittel ausgehärtet werden kann.

Weiterhin wird ein Verfahren zum Anordnen von zumindest zwei Bauteilen vorgesehen, wobei die zumindest zwei Bauteile durch das Verbindungsmittel nach zumindest einem der vorangehenden Aspekte verbunden sind, wobei durch eine Betätigung an der Koppeleinrichtung die Bauteile, vorzugsweise relativ zueinander, bewegt werden, und vorzugsweise nach erfolgter Anordnung zumindest eine der Anschlussvorrichtungen, insbesondere durch Verschrauben an das jeweilige Bauteil, in Bezug auf das jeweilige Bauteil justiert wird.

Durch das erfindungsgemäße Verbindungsmittel können die Bauteile durch Betätigung an der Koppeleinrichtung, also Aufbringen einer Last auf die Koppeleinrichtung im Raum bewegt werden. Ist die Koppeleinrichtung flexibel ausgestaltet, können die Bauteile auch relativ zueinander bewegt werden. Werden beispielsweise die Bauteile aufeinander zubewegt, kann nach erfolgter Anordnung, also in dem finalen Anordnungzustand, durch die Anschlusseinrichtung ein erneutes Verspannen erfolgen.

Die obigen Aspekte werden nachfolgend unter Bezug auf die beigefügten Zeichnungen im Einzelnen erläutert.
Fig. 1 zeigt ein Verbindungsmittel gemäß einer ersten Ausführungsform in Draufsicht.
Fig. 2 zeigt eine Seitenansicht des Verbindungsmittels gemäß der ersten Ausführungsform.
Fig. 3 zeigt ein Verbindungsmittel gemäß einer zweiten Ausführungsform in perspektivischer Ansicht.
Fig. 4 zeigt ein Verbindungsmittel gemäß einer dritten nicht erfindungsgemäßen Ausführungsform in Draufsicht.
Fig. 5 zeigt ein Verbindungsmittel gemäß einer vierten Ausführungsform in isometrischer Ansicht in einem geschlossenen Zustand eines inneren Kettenglieds.
Fig. 6 zeigt das Verbindungsmittel mit dem inneren Kettenglied in einem offenen Zustand.
Fig. 7A zeigt eine als solche nicht erfindungsgemäße Verstärkungseinrichtung in perspektivischer Ansicht mit Verbindungsmittel in einer erfindungsgemäßen Verbindungsanordnung. Fig. 7B zeigt eine weitere perspektivische Ansicht ohne das Verbindungsmittel.

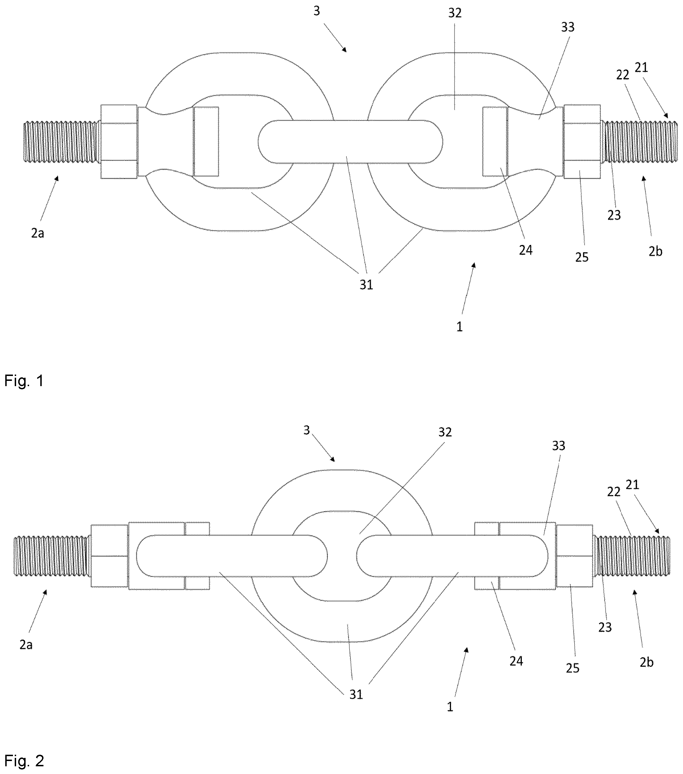

Fig. 1 zeigt ein Verbindungsmittel 1 in Draufsicht. Fig. 2 zeigt eine Seitenansicht des Verbindungsmittels 1. Das Verbindungsmittel 1 weist eine erste Anschlusseinrichtung 2a und eine zweite Anschlusseinrichtung 2b, die sich einander gegenüberliegen. Die Anschlusseinrichtungen 2a und 2b sind über eine Koppeleinrichtung 3 aneinander gekoppelt.

Die Anschlusseinrichtungen 2a und 2b sowie die Koppeleinrichtung 3 erstrecken sich in einer Erstreckungsrichtung von links nach rechts in Fig.1, die einer axialen Richtung des Verbindungsmittels entspricht.

Figuren 1 und 2 zeigen das Verbindungsmittel 1 in einem Zustand, in dem sich das gesamte Verbindungsmittel 1 in der Axialrichtung erstreckt. Im Einzelnen, sind die Axialrichtung der ersten Anschlusseinrichtung 2a, die Axialrichtung der zweiten Anschlusseinrichtung 2b und die Axialrichtung der Koppeleinrichtung 3 zueinander ausgerichtet. In diesem Zustand kann das Verbindungsmittel 1 zur Verbindung von axial beabstandeten Bauteilen (nicht gezeigt) eingesetzt werden. Weiterhin fluchten in dem Zustand die Anbringungsabschnitte der Bauteile miteinander.

Die Anschlusseinrichtungen 2a und 2b sind identisch aufgebaut.

Jede Anschlusseinrichtung weist eine Gewindeeinrichtung 21 auf, beispielsweise eine Schraube. Die Gewindeeinrichtung 21 weist einen Gewindeabschnitt 22 auf, der an einem Wellenabschnitt 23 der Gewindeeinrichtung 21 vorgesehen ist. Der Wellenabschnitt 23 definiert durch seine Erstreckungsrichtung die Axialrichtung der jeweiligen Anschlusseinrichtung 2a und 2b. Der Gewindeabschnitt 22 ist hier in Form eines Außengewindes ausgebildet, der beispielsweise in ein in dem Bauteil vorgesehenes Innengewinde verschraubt werden kann. Allerdings kann auch ein Innengewinde vorgesehen werden. Die Gewindeeinrichtungen 21, insbesondere der Gewindeabschnitt davon, weisen Gewinde gleicher Gangart und vorzugsweise gleicher Steigung auf. Die Gewinde gleicher Gangart können Rechts- oder Linksgewinde sein.

Die Anschlusseinrichtung weist weiterhin einen Schraubenkopf 24 auf, der an einem bauteilfernen Ende des Wellenabschnitts 23 vorgesehen ist. Der Schraubenkopf 24 ist ein erster Sperrabschnitt im Sinne der Ansprüche.

Die Anschlusseinrichtung weist weiterhin eine Sechskantmutter 25 auf. Die Sechskantmutter 25 ist an dem Wellenabschnitt 23 fixiert. Die Sechskantmutter 25 dient als zweiter Sperrabschnitt im Sinne der Ansprüche. Die Sechskantmutter 25 fungiert weiterhin als Ansatzabschnitt, an dem ein Werkzeug zur Betätigung der Anschlusseinrichtung 2a, 2b auf. Somit bildet der Ansatzabschnitt auch den zweiten Sperrabschnitt.

Die Koppeleinrichtung 3 umfasst eine Vielzahl, nämlich drei in der Ausführungsform, von Kettengliedern 31, die direkt hintereinander geschaltet sind. Die Kettenglieder 31 sind jeweils hinterschneidend und gelenkig mit dem benachbarten Kettenglied 31 gekoppelt, sodass sie Relativbewegungen zueinander durchführen können, aber aneinander durch Formschluss gesichert sind.

In Fig.1 und 2 stimmt die Erstreckungsrichtung jedes Kettenglieds 31 mit der Axialrichtung des Verbindungsmittels 1 zusammen. Weiterhin sind die Kettenglieder 31 wechselweise um im Wesentlichen 90° um die Axialrichtung verdreht.

Jedes Kettenglied hat eine geschlossene im Wesentlichen elliptische Gestalt, die einen Hohlraum 32 umgibt. Die Kettenglieder 31 erstrecken sich im Wesentlichen zwischen den Anschlusseinrichtungen 2a und 2b. Die Schraubenköpfe 24 als Sperrabschnitte sind jeweils im Inneren der Koppeleinrichtung 3 angeordnet, insbesondere in dem jeweiligen Hohlraum 32, aufgenommen.

Die beiden äußersten Kettenglieder 31 weisen jeweils einen Kopplungsabschnitt 33 auf. Der Kopplungsabschnitt 33 ist an einem Ende in Erstreckungsrichtung, die entlang der großen Hauptachse der elliptischen Gestalt verläuft, des jeweiligen Kettenglieds 31, also an einer bauteilnahen Seite des jeweiligen Kettenglieds 31 in dem in Fig. 1 und 2 gezeigten Zustand vorgesehen. Die Kopplungsabschnitte 31 sind somit an gegenüberliegenden Endabschnitten der Koppeleinrichtung 3 vorgesehen.

Der Kopplungsabschnitt 33 umfasst einen Öffnungsabschnitt, der sich in der Erstreckungsrichtung des Kettenglieds 31 erstreckt. So kann der Kopplungsabschnitt 33 durch ein Ösenelement gebildet werden, das an einen Hauptabschnitt des Kettenglieds 31, das zur Aufnahme des Ösenelements eine Aussparung an einem Endabschnitt in der Richtung der großen Hauptachse aufweist, geschweißt ist.

Durch den Öffnungsabschnitt verläuft der Wellenabschnitt 23 der Anschlusseinrichtung. Wie insbesondere in Fig. 1 zu sehen ist, befindet sich zu einer bauteilfernen Seite des Öffnungsabschnitts der Schraubenkopf 24 und zu einer bauteilnahen Seite des Öffnungsabschnitts die Sechskantmutter 25. Sowohl der Schraubenkopf 24 als auch die Sechskantmutter 25 weisen jeweils eine größere Außenquerschnittsabmessung ab, insbesondere einen größeren Durchmesser, als zumindest ein Bereich des Öffnungsabschnitts auf, sodass eine Relativbewegung der Anschlusseinrichtung zu dem Kettenglied 31 durch Anlage des Schraubenkopfs 24 und der Sechskantmutter an dem Kopplungsabschnitt 33 unterbunden werden kann. In dem Öffnungsabschnitt ist die Anschlusseinrichtung 2a und 2b jeweils beweglich, insbesondere um die Axialrichtung drehbar, gelagert. Die axiale Festlegung erfolgt bevorzugt durch Formschluss, kann aber auch durch Kraftschluss oder Stoffschluss erfolgen.

Funktionen und Effekte der vorliegenden Erfindungen werden nachfolgend beschrieben.

Durch das Verbindungsmittel 1 können zumindest zwei entlang der Axialrichtung des Verbindungsmittels beabstandete Bauteile, insbesondere Betonfertigteile, verbunden werden. Das Verbindungsmittel 1 umfasst: zumindest zwei Anschlusseinrichtungen 2a und 2b, über die das Verbindungsmittel 1 jeweils an einem der zumindest zwei Bauteile anbringbar ist, und eine Koppeleinrichtung 3, die die zumindest zwei Anschlusseinrichtungen zumindest zur Übertragung von Zugkräften aneinander koppelt. Ein Zustand, in dem Zugkräfte übertragen werden können, ist in Figuren 1 und 2 gezeigt. Durch Formschluss werden die einzelnen Kettenglieder 31 gegeneinander in Anlage gebracht, sodass an den Kontaktabschnitten Zugkräfte übertragen werden können.

Wie oben beschrieben ist jede der Anschlusseinrichtungen 2a und 2b an den Kopplungsabschnitt 33 der Koppeleinrichtung 3 zumindest in Bezug auf die axiale Richtung festgelegt gekoppelt. Sowohl bei Druck- als auch bei Zugbeanspruchung des Verbindungsmittels 1 ist die Anschlusseinrichtung axial festgelegt, also in beiden Richtungen. Auch bei Betätigung (Anbringen oder Lösen) der Anschlusseinrichtung sind die Anschlusseinrichtungen axial festgelegt.

Dadurch kann die Zugkraft zuverlässig in die Koppeleinrichtung eingeleitet werden. Zudem muss kein Platz zum axialen Verschieben der Anschlusseinrichtungen 2 vorgesehen werden. Somit kann das Verbindungsmittel 1 als solches kompakt gehalten werden. Weiterhin kann eine Betätigungseinrichtung, wie beispielsweise ein Hydraulikmechanismus oder ein Roboter, leicht an der und/oder in der Koppeleinrichtung 3 ansetzten, um das Verbindungsmittel 1 zu betätigen. Insbesondere kann die Betätigungseinrichtung in die Kettenglieder 31, also in den jeweiligen Hohlraum 32, der jeweiligen äußeren Kettenglieder 31 eingreifen, um die Anschlusseinrichtungen 2a und 2b an den jeweiligen Bauteilen anzubringen oder um bei bereits angebrachten Anschlusseinrichtungen die jeweiligen Bauteile über Bewegen der äußeren Kettenglieder 31 zueinander relativ zu bewegen.

Weiterhin ist jeder der Schrauben und damit die Anschlusseinrichtungen 2a und 2b an dem jeweiligen Kopplungsabschnitt 33 der Koppeleinrichtung 3 zumindest in Bezug auf die axiale Richtung festgelegt gekoppelt.

Somit kann jede der Anschlusseinrichtungen 2a und 2b platzsparend an die Koppeleinrichtung 3 gekoppelt werden. Kompaktheit und Handhabung des Verbindungsmittels 1 lassen sich so weiterhin verbessern.

Die Schraube ist jeweils beweglich an den jeweiligen Kopplungsabschnitt 33 gekoppelt. Die Schraube kann sich in dem Öffnungsabschnitt 33 frei hin- und herdrehen. Die Anschlusseinrichtung ist dabei insbesondere eine Einrichtung, die sich integral als Einheit bewegt.

Dadurch kann die Anbringung an das jeweilige Bauteil erleichtert werden. Durch Drehung um die axiale Richtung kann die Schraube an dem Bauteil angebracht werden, während sie bezüglich der Koppeleinrichtung axial unverschieblich ist. Ebenso können Toleranzen leichter ausgeglichen werden. Anstatt des oder zusätzlich zu dem rotatorischen Freiheitsgrad kann auch ein Langloch in dem Kopplungsabschnitt vorgesehen werden. Somit kann eine Bewegung quer zur axialen Richtung der Anschlusseinrichtung ermöglicht werden.

Die Anschlusseinrichtung 2a und 2b ist jeweils direkt an dem jeweiligen Bauteil anbringbar. Insbesondere, ist die Schraube als Gewindeeinrichtung direkt an dem jeweiligen Bauteil verschraubbar. Der Gewindeabschnitt 22 ist insbesondere auf einer bauteilnahen Seite, also einer Außenseite, bezüglich des Kopplungsabschnitts vorgesehen. Dadurch wird bei Verschraubung die Koppeleinrichtung 3 in Richtung Bauteil gezogen.

Somit kann das Verbindungsmittel auf einfache Weise verspannt werden und die Konfiguration kann kompakt gehalten werden.

Der Kopplungsabschnitt 33 weist einen Öffnungsabschnitt auf, der sich entlang der axialen Richtung erstreckt und durch den zumindest ein Teil der jeweiligen Anschlusseinrichtung 2a und 2b, insbesondere der Wellenabschnitt 23 der Gewindeeinrichtung 21, verläuft.

Dies erlaubt eine einfache Lagerung der Anschlusseinrichtung 2a und 2b an dem jeweiligen Kopplungsabschnitt 33. Zwischen Anschlusseinrichtung und Öffnungsabschnitt kann zumindest ein Lager, vorzugsweise ein Wälzlager vorgesehen werden.

Das Verbindungsmittel 1 weist einen ersten Sperrabschnitt 24, den Schraubenkopf 24 der jeweiligen Gewindeeinrichtung 21, auf der bauteilfernen Seite auf, der zumindest die Verschiebung der Anschlusseinrichtung zu dem jeweiligen Bauteil hin unterbindet, und weist den zweiten Sperrabschnitt 25, die Sechskantmutter, auf der bauteilnahen Seite auf, der zumindest die Verschiebung der zumindest einen Anschlusseinrichtung von dem jeweiligen Bauteil weg unterbindet.

Somit kann die Anschlusseinrichtung 2a und 2b an dem Kopplungsabschnitt 33 auf einfache Weise durch die Sperrabschnitte axial festgelegt werden. Wird der Schraubenkopf 24 als einer der Sperrabschnitte verwendet, kann der Montageaufwand und Komponentenzahl reduziert werden.

Die Koppeleinrichtung 3 ist so ausgestaltet, dass die zumindest zwei Anschlusseinrichtungen 2a und 2b relativ zueinander beweglich sind. Insbesondere sind die jeweiligen Kopplungsabschnitte 33 zueinander beweglich. Durch die Vielzahl von Kettengliedern 31, die in Fig. 1 und 2 zwar Zugkräfte übertragen können, bei Druck-, Biege- und Torsionsbelastung allerdings relativ zueinander bewegt werden können, ist die Koppeleinrichtung 3 zumindest abschnittsweise druckweich und biegeweich und torsionsweich ausgestaltet. An dieser Stelle sei darauf hingewiesen, dass die Koppeleinrichtung auch ein Seil umfassen kann, dass ähnliche Eigenschaften aufweist.

Dadurch können Toleranzen, Versatz und Ausrichtungsunterschiede der jeweiligen Bauteile und der jeweiligen Anschlusseinrichtungen 2a und 2b kompensiert werden. Es ist zur Kenntnis zu nehmen, dass Figuren 1 und 2 einen Zustand einer fluchtenden Ausrichtung zeigen. Ebenso können die jeweiligen Bauteile sogar in einem Zustand, in dem das Verbindungsmittel 1 über die jeweiligen Anschlusseinrichtungen 2a und 2b angebracht ist relativ zueinander bewegt werden.

Die Positionen der zumindest zwei Anschlusseinrichtungen 2a und 2b, insbesondere der jeweiligen Kopplungsabschnitte 33, zueinander, sind entlang der axialen Richtung beweglich. Zudem sind die Ausrichtungen der beiden Anschlusseinrichtungen 2a und 2b, also deren Erstreckungsrichtungen und die der Kopplungsabschnitte 33, zueinander veränderlich.

Dadurch können die Bauteile aufeinander zubewegt werden und/oder Abweichungen von Bauteilanbringungsabschnitten, an denen die Anschlusseinrichtungen jeweils anzubringen sind, zueinander ausgeglichen werden.

Die Koppeleinrichtung 3 weist eine Vielzahl von Kettengliedern 3 auf, die hinterschneidend und/oder gelenkig gekoppelt sind. Weiterhin weisen die beiden äußeren Kettenglieder 33 den jeweiligen Kopplungsabschnitt 33 auf.

Durch die Kettenglieder 31 kann die Koppeleinrichtung 3 kompakt ausgeführt werden, wobei. Das Kettenglied kann auch einfach betätigt werden. Wird eine Vielzahl von wie oben spezifiziert angeordneten Kettengliedern vorgesehen, kann die Koppeleinrichtung 3 flexibel ausgestaltet werden. Die Anzahl von drei Kettengliedern ist dabei bevorzugt, weil Kompaktheit gewahrt bleibt und Ausrichtungsunterschiede sowie Versatz der Anschlusseinrichtungen 2a und 2b ausgeglichen werden können.

Das Verbindungsmittel 1 ist durch Verschrauben der Anschlusseinrichtungen 2a und 2b an dem jeweiligen Bauteil spannbar. Somit kann auf einfache Weise eine Verspannung der Bauteile erfolgen und eine Zugbelastung auf die Koppeleinrichtung 3 aufgebracht werden.

Durch Verschrauben der Anschlusseinrichtungen 2a und 2b sind die zumindest zwei Anschlusseinrichtungen 2a und 2b, insbesondere die jeweiligen Kopplungsabschnitte 33, voneinander beabstandbar. Somit muss kein Raum zur Aufnahme der Anschlusseinrichtungen vorgesehen werden.

Das Verbindungsmittel ist auch durch voneinander Beabstanden der Anschlusseinrichtungen 2a und 2b spannbar. Dadurch können die Kettenglieder 31 zuverlässig in Anlage miteinander gebracht werden und auf einfache Weise kann eine Verspannung der Bauteile erfolgen und eine Zugbelastung auf die Koppeleinrichtung 3 aufgebracht werden.

Das Verbindungsmittel 1 ist zumindest abschnittsweise, vorzugsweise vollständig aus Metall, nochmals vorzugsweise aus, insbesondere zugfestem, Stahl gefertigt. Dadurch können die wirkenden Kräfte sicher zwischen den Bauteilen übertragen werden. Insbesondere die Kettenglieder 31 der Koppeleinrichtung 3 können zumindest abschnittsweise aus den genannten Materialien gefertigt sein.

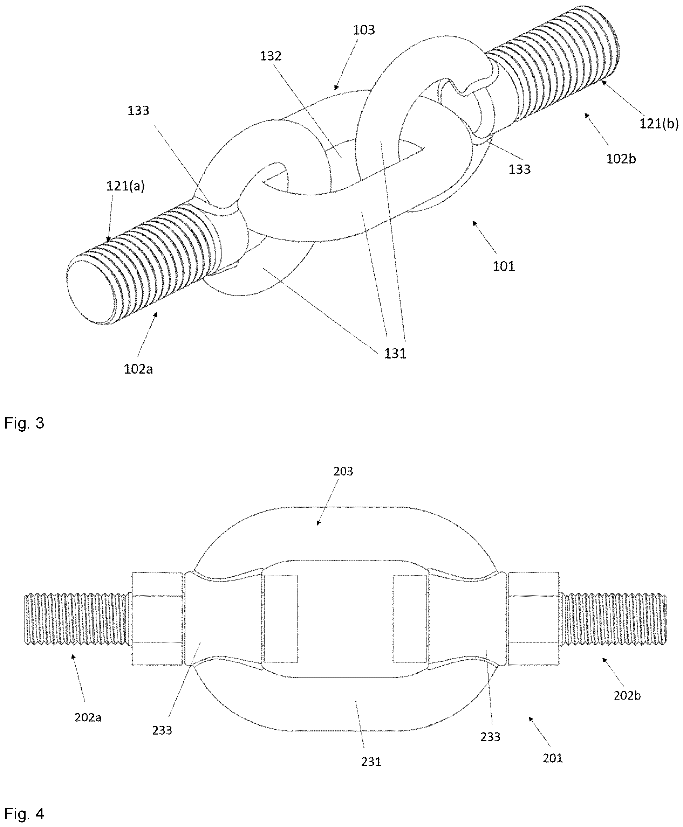

Eine weitere Ausführungsform ist in Fig. 3 gezeigt.

Fig. 3 zeigt eine isometrische Ansicht eines Verbindungsmittels 101. Der Aufbau des Verbindungsmittels 101 entspricht im Wesentlichen dem des Verbindungsmittels 1.

Allerdings ist die jeweilige Gewindeeinrichtung 121 in der zweiten Ausführungsform an das jeweilige Kettenglied 131 verschweißt. Somit hat die jeweilige Anschlusseinrichtung 102a und 102b keinen rotatorischen Freiheitsgrad gegenüber der Koppeleinrichtung.

Die Gewindeeinrichtung ist hier stangenförmig als Gewindestange ausgebildet, wobei ein Endabschnitt an dem Kettenglied 131 verschweißt ist. Die jeweils äußeren Kettenglieder haben eine im Wesentlichen kreisförmige Gestalt.

Zumindest ein inneres Kettenglied hat weiterhin eine länglich erstreckte Gestalt, wie die Ellipsenform. Somit kann genügend Raum zur Relativbewegung in dem Hohlraum 132 vorgesehen werden.

Die äußeren Kettenglieder können auch integral mit der Anschlusseinrichtung ausgebildet sein. So kann eine Augenschraube als Kombination aus Kettenglied und Anschlusseinrichtung vorgesehen werden.

Ein weiterer Unterschied zur ersten Ausführungsform besteht darin, dass die Anschlusseinrichtungen 102a und 102b nicht identisch ausgeführt sind.

So weist die Anschlusseinrichtung 102a eine Gewindeeinrichtung 121a mit rechtsgängigem Gewinde auf, während die Anschlusseinrichtung 102b eine Gewindeeinrichtung 121b mit linksgängigem Gewinde aufweist. Die Bauteilanbringungsabschnitte sind entsprechend gestaltet.

Dadurch kann eine Verspannung des Verbindungsmittels 101 und/oder eine Anbringung an das jeweilige Bauteil auf synchrone Weise geschehen. Insbesondere kann durch Drehung an der Koppeleinrichtung 103 die Verspannung und/oder die Anbringung an beiden Bauteilen erfolgen. Eine Betätigungseinrichtung kann beispielsweise das innere Kettenglied 131 um die axiale Richtung drehen, wobei nach kurzem Schlupf bedingt durch den annähernd 90°-Versatz um die axiale Richtung der Kettenglieder 131, die Drehung auf die äußeren Kettenglieder 131 übertragen wird. Diese Drehung wird durch die drehsteife Kopplung an die Gewindeeinrichtung 121 übertragen, wodurch beide Anschlusseinrichtungen synchron verschraubt werden können, während sie gemäß der ersten Ausführungsform unabhängig voneinander verschraubt werden können.

Fig. 4 zeigt eine Draufsicht eines Verbindungsmittels 201 gemäß einer dritten nicht erfindungsgemäßen Ausführungsform.

Der Aufbau des Verbindungsmittels 201 entspricht im Wesentlichen dem des Verbindungsmittels 1.

Allerdings ist nur ein zentrales Kettenglied 231 vorgesehen, an dessen gegenüberliegenden Endabschnitten in Erstreckungsrichtung die Anschlusseinrichtungen 202a und 202b gekoppelt sind.

Die Kopplung an den gegenüberliegenden Kopplungsabschnitten 233 entspricht der der ersten Ausführungsform.

Auch in diesem Beispiel kann eine Betätigungseinrichtung an dem Kettenglied 231 angreifen, um die aneinander gekoppelten Bauteile im Raum zu bewegen.

Weiterhin kann diese Koppeleinrichtung 203 auch zuverlässig Druckkräfte übertragen.

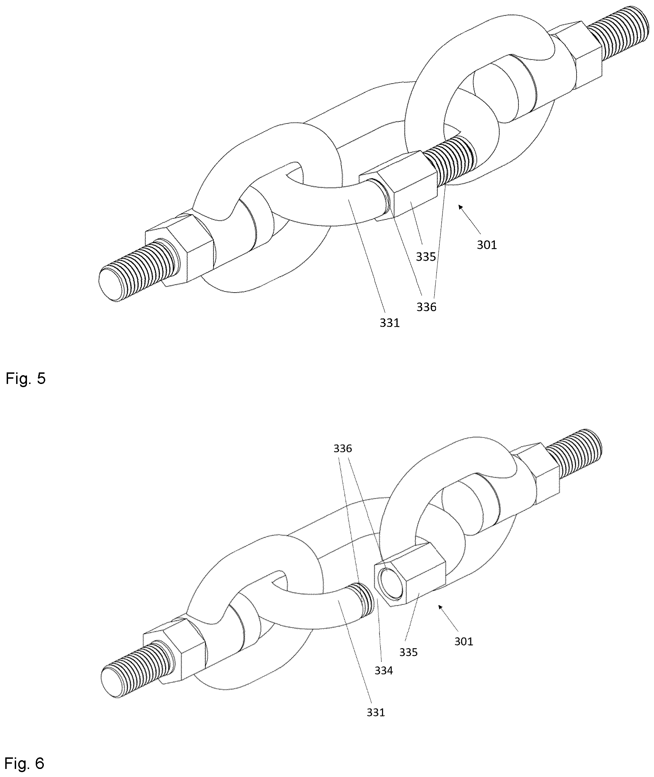

Figuren 5 und 6 zeigen schließlich eine vierte Ausführungsform der Erfindung.

Fig. 5 zeigt ein Verbindungsmittel 301 in isometrischer Ansicht in einem geschlossenen Zustand des inneren Kettenglieds 331. Fig. 6 zeigt das Verbindungsmittel 301 mit dem inneren Kettenglied 331 in einem offenen Zustand.

Im Gegensatz zu der ersten Ausführungsform ist das innere Kettenglied 331 als Karabinerglied ausgestaltet, das reversibel zugänglich ist. Insbesondere ist das innere Kettenglied 331 öffenbar und verschließbar. Zu diesem Zweck weist es eine in Fig. 6 zu sehende Aussparung 334, auf einer Seite parallel zur Erstreckungsrichtung auf. Ein Verschlusselement 335 ist an dem Kettenglied 331 vorgesehen, um die Aussparung 334 reversibel zu verschließen.

Zu beiden Seiten der Aussparung 334 sind an dem Kettenglied 331 jeweils Gewindeabschnitte 336 vorgesehen, die gleich konfiguriert sind. Das Verschlusselement 335 ist mit einem entsprechenden Innengewinde versehen und kann durch Verschrauben die beiden Gewindeabschnitte 336 überbrücken, um die Aussparung 334 zu verschließen.

Somit können weitere Kettenglieder in das innere Kettenglied 331 eingekoppelt werden. Somit kann das Verbindungsmittel 301 für verschiedene Anwendungen und Abstände von Bauteilen vorgesehen werden.

Allerdings kann auch eines der äußeren Kettenglieder auf diese Art und Weise ausgestaltet werden. Das Verschlussglied kann auch rotatorisch an einem der Aussparung benachbarten Abschnitte des Kettenglieds vorgesehen werden, und durch Vorspannung in den geschlossenen Zustand überführt werden. Es muss ferner nicht zwingend ein Verschlussglied vorgesehen werden. Vorzugsweise weist das reversibel zugängliche Kettenglied jedoch eine Aussparung aus.

Weitere Abwandlungen werden nun beschrieben.

Die Zahl der Kettenglieder ist nicht auf drei beschränkt und kann eine andere Vielzahl mehr als drei betragen.

Die Koppeleinrichtung kann auch ein Seil oder einen Draht oder ein Kreuzgelenk umfassen.

In den Ausführungsformen weist die eine Anschlusseinrichtung die Gewindeeinrichtung auf, und wird von dieser gebildet. Allerdings ist die andere Anschlusseinrichtung nicht darauf beschränkt. Die Anschlusseinrichtung kann beispielsweise eine Platte umfassen, die sich an einem Endabschnitt eines Wellenabschnitts vorzugsweise quer zu diesem erstreckt. Diese Platte kann an einem Bauteil verschweißt werden. Auch sind andere Befestigungsmittel als Gewinde für die Anschlusseinrichtungen denkbar. So kann beispielsweise ein Bajonettelement als Befestigungsmittel dienen und die Anschlusseinrichtung bilden oder zumindest Teil davon sein.

Die Anschlusseinrichtung ist vorzugsweise eine Einrichtung, die sich als Einheit bewegt, wobei weiterhin vorzugsweise keine Elemente mit relativem Freiheitsgrad zwischen Anschlusseinrichtung und Bauteil geschaltet sind.

Obwohl nicht dargestellt, kann die Koppeleinrichtung eine Kraftmesseinrichtung aufweisen, die eine auf die Koppeleinrichtung wirkende Kraft, vorzugsweise zumindest eine Zugkraft, messen kann.

Dies erlaubt eine einfache Bestimmung der auf das Verbindungsmittel wirkenden Zugkraft. Ebenso kann dadurch eine Verspannung der Bauteile genau eingestellt werden. Die Kraftmesseinrichtung kann insbesondere einen Anzeigeabschnitt aufweisen, an dem die wirkende Kraft ablesbar ist.

Weiterhin kann die Anschlusseinrichtung einen Ansatzabschnitt zum Betätigen der Anschlusseinrichtung aufweisen. Dieser Ansatzabschnitt ist vorzugsweise auf einer bauteilnahen Seite des Kopplungsabschnitts vorgesehen. Er kann beispielsweise die Sechskantmutter umfassen. Vorzugsweise weist er eine von einer runden Form abweichende Form auf. Er kann vorspringend und/oder vertiefend ausgebildet sein. An dem Ansatzabschnitt können Werkzeuge angreifen um die Anschlusseinrichtung an dem jeweiligen Bauteil anzubringen. In der obigen ersten Ausführungsform bildet die Sechskantmutter 25 den Ansatzabschnitt und damit auch den bauteilnahen Sperrabschnitt. Allerdings kann der Ansatzabschnitt auch getrennt und unabhängig von dem Sperrabschnitt vorgesehen werden.

Es ist auch möglich, an der Anschlusseinrichtung Markierungen, vorzugsweise in gleichmäßigen Abständen entlang der axialen Richtung, vorzusehen. Somit kann eine relative Positionierung zwischen Bauteil und Anschlusseinrichtung überprüft werden.

Der oben spezifizierte Zustand, wobei Bauteilanbringungsabschnitte in Ausrichtung und Position entlang der Axialrichtung übereinstimmen, ist nur ein Zustand, den das Verbindungsmittel einnehmen kann und wurde zur Erläuterung gewählt. Die Bauteile können beliebig zueinander angeordnet sein. Beispielsweise können die Bauteile, insbesondere die Bauteilanbringungsabschnitte, entlang einer Richtung quer zur Axialrichtung der jeweiligen Anschlusseinrichtung angeordnet sein. Die Achsen der Anschlusseinrichtungen können geneigt zueinander sein.

Ein weiterer Aspekt der vorliegenden Erfindung ist auf eine Verbindungsanordnung gerichtet, die umfasst: zumindest zwei Bauteile, vorzugsweise Betonfertigteile; und ein Verbindungsmittel, wie es oben beschrieben ist. Eine Anschlusseinrichtung ist an einem der zumindest zwei Bauteile angebracht, vorzugsweise daran verschraubt, und die andere Anschlusseinrichtung ist an dem anderen der zumindest zwei Bauteile angebracht, vorzugsweise daran verschraubt.

Somit können die Bauteile durch das Verbindungsmittel zur Übertragung von Lasten aneinander gekoppelt werden. Die Bauteile können dabei insbesondere vorgespannt werden.

Vorzugsweise sind die zumindest zwei Bauteile bis auf das Verbindungsmittel frei beweglich aufeinander gelagert.

Somit dient das Verbindungsmittel als Sicherungsmittel. Das Verbindungsmittel kann somit verhindern, dass die Bauteile voneinander ohne Anbindung aneinander getrennt werden. Ein Anwendungsfall stellt eine auf Konsolen gelagerte Kranbahn dar. Bei thermischen Einflüssen kann sich die Bahn zusammenziehen und so von den Konsolen rutschen. Das Verbindungsmittel befindet sich bei Auflagerung in einem schlaffen Zustand, wobei die Kettenglieder keine Zugkräfte übertragen und ohne Vorspannung in einander greifen. Das Verbindungsmittel ist idealerweise so dimensioniert, dass eine Relativbewegungslänge vom Auslegungszustand bis zum Trennen zwischen den Bauteilen größer ist als die maximale Strecklänge, welche den Unterschied in der Länge zwischen der Koppeleinrichtung mit auf Block gelaufenen Kettengliedern und der Koppeleinrichtung mit gestreckten Kettengliedern ohne Vorspannung angibt. Somit kann vor dem Rutschen von der Konsole das Verbindungsmittel als Sicherungsmittel dienen.

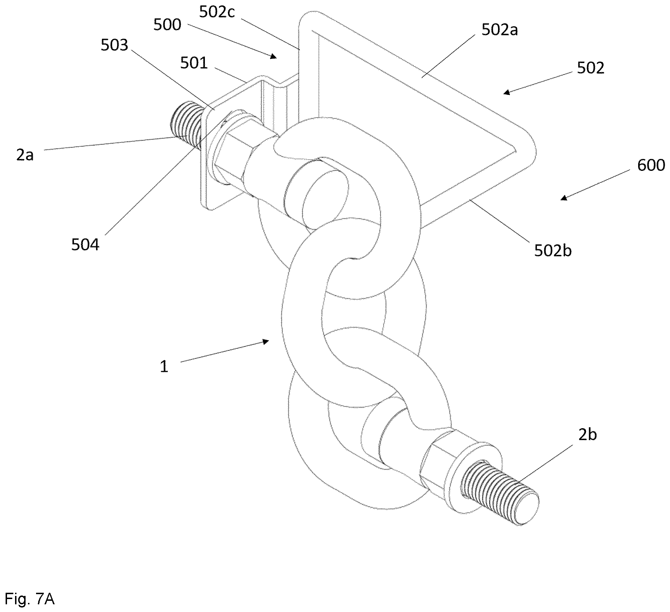

In einer Verbindungsanordnung, wovon Elemente, insbesondere Elemente außer den Bauteilen selbst, in Fig. 7A gezeigt sind, ist eine als solche nicht erfindungsgemäße Verstärkungseinrichtung 500 vorgesehen.

Die Verstärkungseinrichtung 500 wird mittels des Verbindungsmittels 1, insbesondere über die Anschlusseinrichtung 2a, an eines der Bauteile gekoppelt und an diesem angebracht. Die Verstärkungseinrichtung 500 weist einen Basisabschnitt 501 und einen Verstärkungsabschnitt 502 auf.

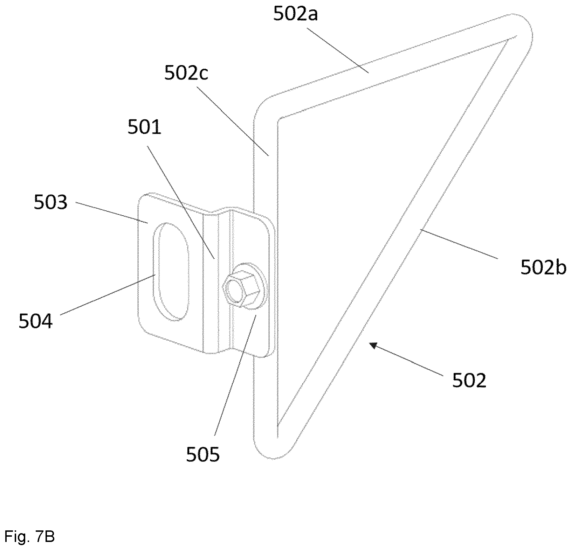

Der Basisabschnitt 501 umfasst einen Anbringungsabschnitt 503 mit einem Öffnungsabschnitt 504. Der Öffnungsabschnitt 504 ist, wie insbesondere in Fig. 7B zu sehen ist, als Langloch ausgebildet. Es ist zu beachten, dass Fig. 7B den Anbringungsabschnitt auf der anderen Seite als in Fig. 7A aus Gründen der Darstellung hat.

Der Basisabschnitt 501 hat eine im Wesentlichen rechteckige Gestalt mit abgerundeten Ecken. In einer Erstreckungsrichtung des Basisabschnitts 501 gesehen, weist der Basisabschnitt wie hier vorzugsweise einen Versatz in axialer Richtung auf. Die axiale Richtung ist eine Richtung entlang der Anschlusseinrichtung 2a, die in dem einen Bauteil verschraubt wird. Somit hat der Basisabschnitt eine gekröpfte Gestalt, was die Montage vereinfacht.

An einem Endabschnitt des Basisabschnitts 501 befindet sich der Anbringungsabschnitt 503 und am entgegengesetzten Endabschnitt befindet sich der Verstärkungsabschnittkopplungsabschnitt 505, an dem der Verstärkungsabschnitt 502 an den Basisabschnitt gekoppelt ist. Der Anbringungsabschnitt ist somit entlang der axialen Richtung von dem Verstärkungsabschnittkopplungsabschnitt versetzt. Weiterhin ist der Anbringungsabschnitt 501 von dem Verstärkungsabschnittkopplungsabschnitt 505 auch in einer Richtung senkrecht zur axialen Richtung, also in Erstreckungsrichtung des Basisabschnitts, beabstandet. Die Richtung senkrecht zur axialen Richtung ist in diesem Fall bevorzugt eine Richtung senkrecht zur Ebene des Verstärkungsabschnitts 502, der im Wesentlichen eine Ebene definiert.

Der Verstärkungsabschnitt 502 weist drei Stabelemente 502a, 502b und 502c auf, die an ihren Enden jeweils miteinander gekoppelt und verbunden sind. Die Stabelemente sind gerade Erstreckungsabschnitte des Verstärkungsabschnitts 502. Die Koppelung ist vorzugsweise starr, kann aber auch gelenkig sein.

Wie hier dargestellt, ist der Verstärkungsabschnitt vorzugsweise im Wesentlichen in einer Ebene ausgebildet.

Die drei Stabelemente 502a, 502b und 502c bilden eine geschlossene Form, insbesondere eine Dreiecksform, aus. In einem Mittelabschnitt des Stabelements 502c, das mit dem Stabelement 502a rechtwinklig gekoppelt ist, ist der Verstärkungsabschnitt an den Basisabschnitt 501 gekoppelt.

Das Stabelement 502c ist parallel zur Gravitationsrichtung in einem montierten Zustand ausgerichtet. Weiterhin erstreckt sich das Stabelement 502a von der Seite des Basisabschnitts 501 weg in axialer Richtung an einem oberen Endabschnitt, insbesondere oberen Ende, in Gravitationsrichtung des Stabelements 502c. An einem Endabschnitt, insbesondere an einem Ende auf einer dem Basisabschnitt 501 abgewandten Seite ist das Stabelement 502b an das Stabelement 502a angekoppelt. Das Stabelement 502b erstreckt sich diagonal in Gravitationsrichtung abwärts sowie zur Seite des Basisabschnitts in axialer Richtung hin. Das Stabelement 502b koppelt an einem unteren Endabschnitt, insbesondere an einem unteren Ende, an das Stabelement 502c, um die Form zu schließen.

Der Verstärkungsabschnitt 502 ist über eine Schraubverbindung, wie es aus Fig. 7B hervorgeht, mit dem Basisabschnitt 501 gekoppelt. Dabei kann vorzugsweise der Verstärkungsabschnittkopplungsabschnitt 505 zumindest ein Langloch, insbesondere zwei sich kreuzende Langlöcher aufweisen. Das Stabelement 502c kann eine Gewindebohrung aufweisen, in die die Schraube verschraubt werden kann, oder ein Durchgangsloch, beispielsweis zumindest ein Langloch, durch das eine Schraube im Einklang mit dem Langloch des Verstärkungsabschnittkopplungsabschnitts 505 gesteckt werden kann, wobei eine Mutter zur Befestigung auf einer gegenüberliegenden Seite des Schraubenkopfs vorgesehen werden kann. In Fig. 7B ist weiterhin eine Beilagscheibe zwischen Mutter und Basisabschnitt zwischengeschaltet.

Die andere Anschlusseinrichtung 2b des Verbindungsmittels 1 wird in ein nicht dargestelltes anderes Bauteil verschraubt.

Die Verstärkungseinrichtung 500 und insbesondere der Verstärkungsabschnitt sind vorzugsweise aus hochfestem Material, wie hochfestem Metall, beispielsweise Stahl, oder Verbundwerkstoffen wie kohlefaserverstärkte Verbundwerkstoffe gefertigt. Die Verstärkungseinrichtung 500 befindet sich in einem axialen Zwischenraum 600 zwischen den nicht dargestellten Bauteilen.

Dieser Zwischenraum 600 kann von Mörtel, Beton oder jedem weiteren Strukturanbindungsmittel zur Anbindung der beiden Bauteile befüllt werden, sodass der Verstärkungsabschnitt zumindest teilweise, vorzugsweise komplett, von dem Strukturanbindungsmittel umgeben ist. Somit kann eine Last zwischen den Bauteilen zumindest indirekt über das Strukturanbindungsmittel in die Verstärkungseinrichtung eingeleitet werden und über diese übertragen werden.

Die Verstärkungseinrichtung 500 umfasst den Basisabschnitt 501, der mittels der Anschlusseinrichtung 2a des Verbindungsmittels 1 mit einem Anbringungsabschnitt 503 an einem der Bauteile anbringbar ist, und einen Verstärkungsabschnitt 502, der an den Basisabschnitt 501 gekoppelt ist und über den eine Last zwischen den Bauteilen übertragbar ist.

Durch eine solche Verstärkungseinrichtung 500 kann die Kraftübertragung zwischen den beiden Bauteilen verbessert werden. Insbesondere kann eine stabile Verbindung über die Verstärkungseinrichtung 500 geschaffen werden. Die Verstärkungseinrichtung 500 kann weiterhin in einfacher Weise über das Verbindungsmittel 1 an dem einen Bauteil angebracht werden.

Der Anbringungsabschnitt 503 weist den Öffnungsabschnitt 504 auf, durch den die eine Anschlusseinrichtung 2a verlaufen kann.

Somit kann die Verstärkungseinrichtung 500 in einfacher Weise und platzsparend an dem einen Bauteil angebracht werden und mit diesem gekoppelt werden, indem die Anschlusseinrichtung 2a zumindest abschnittsweise durch den Öffnungsabschnitt 504 verläuft. Dabei kann die Verstärkungseinrichtung, genauer, der Basisabschnitt 501 gegen das eine Bauteil gepresst werden. Der Öffnungsabschnitt 504 kann beispielsweise ein Durchgangsloch umfassen oder sein. Insbesondere kann der Öffnungsabschnitt 504 zumindest ein Langloch, vorzugsweise zumindest zwei einander kreuzende Langlöcher, umfassen oder sein.

Über das zumindest eine Langloch des Verstärkungsabschnittkopplungsabschnitts 505 ist der Verstärkungsabschnitt 502 einstellbar an den Basisabschnitt 501 gekoppelt.

Somit kann Verstärkungsabschnitt 502 vor Ort entsprechend den Geometrien und der Anordnung der Bauteile in zumindest einem von Position und Orientierung eingestellt werden. Dazu weist die Verstärkungseinrichtung das Langloch als Einstellmittel auf. Dies ist insbesondere vorteilhaft, wenn die Achsen der Anschlusseinrichtungen 2a und 2b, wie in Fig. 7A versetzt sind. Denn dann kann auf diese Abweichung durch Verschiebung entlang des Langlochs reagiert werden. Die Einstellbarkeit ist insbesondere in zumindest einer Richtung senkrecht zur axialen Richtung der Anschlusseinrichtung 2a gegeben.

Zum Beispiel kann die Verbindungsanordnung eine Wand als das eine Bauteil und eine Balkonplatte als das andere Bauteil aufweisen. Die Balkonplatte steht von der Wand in axialer Richtung vor. Die Balkonplatte kann zunächst in Bezug auf die Wand vorzugsweise mit einem axialen Zwischenraum angeordnet werden und über externe Vorrichtungen gestützt werden.

Dann kann die Anschlusseinrichtung 2a in die Wand verschraubt werden, wobei der Basisabschnitt 501 dazwischen angeordnet ist, und die Anschlusseinrichtung 2b in die Balkonplatte. Durch Verschrauben werden die beiden Bauteile verspannt. Dabei wird das Verbindungsmittel 1 auf Zug beansprucht und die Bauteile auf Druck. Dann kann der Zwischenraum mit Mörtel und/oder Beton gefüllt werden. Nachdem Abbinden können die externen Vorrichtungen entfernt werden.

Dann wird die Gewichtslast der Betonplatte sowie an ihr wirkende externe Lasten über den gefüllten Zwischenraum, in dem das Verbindungsmittel 1 und die Verstärkungseinrichtung 500 angeordnet sind, auf die Wand übertragen.

Das Stabelement 502a ist parallel zur axialen Richtung angeordnet und wird durch das Gewicht der Balkonplatte im Wesentlichen auf Zug beansprucht. Das Stabelement 502b hingegen wird im Wesentlichen auf Druck beansprucht. Vorzugsweise ist wie hier, das Stabelement 502a zumindest abschnittsweise, über den Stabelement 502b und 502c angeordnet.

Durch die nicht parallele Anordnung der geraden Erstreckungselemente, kann insbesondere bei einer senkrecht zur axialen Richtung auf einer von dem Basisabschnitt 501 in axialer Richtung abgewandten Seite wirkenden Last, ein Druckbeanspruchungsabschnitt durch das Stabelement 502b und ein Zugbeanspruchungsabschnitt durch das Stabelement 502a ausgebildet werden. Insbesondere ist der gerade Erstreckungsabschnitt 502a im Wesentlichen parallel zu der axialen Richtung angeordnet und der gerade Erstreckungsabschnitt 502c ist im Wesentlichen parallel zur Gravitationsrichtung angeordnet.

Weiterhin erstreckt sich der gerade Erstreckungsabschnitt 502b an einem von dem Basisabschnitt abgewandten Endabschnitt des parallel zur axialen Richtung angeordneten geraden Erstreckungsabschnitts in Richtung der Gravitationsrichtung und zur Seite des Basisabschnitts 501.

Somit kann die Verstärkungseinrichtung 500 verschiedenen Belastungen gerecht werden und eine homogene Beanspruchung vorsehen.

Die Stabelemente 502a, b und c können eine Kraft in ihrer Erstreckungsrichtung übertragen.

Dadurch kann eine wohl definierte Kraftübertragung erreicht werden.

Der Verstärkungsabschnitt 502 ist im Wesentlichen in einer Dreiecksform ausgebildet, insbesondere in der Form eines rechtwinkligen, insbesondere bevorzugt gleichschenkligen, Dreiecks, wobei die Stabelemente 502a und c gleich lang sein können.

Somit kann eine Kraftübertragung ähnlich einem Fachwerk erreicht werden. Dabei kann die Dreiecksform von drei miteinander verbundenen geraden Erstreckungsabschnitten gebildet werden.

Auch wenn nicht gezeigt, kann in der Verbindungsanordnung der Zwischenraum in axialer Richtung zumindest eine Hinterschneidung mit zumindest einem der Bauteile aufweisen.

Weiterhin kann in der Verstärkungseinrichtung 500 einer der geraden Erstreckungsabschnitte, hier das Stabelement 502b, in einem Winkel, bevorzugt zwischen 30° und 60°, insbesondere von 45°, zur axialen Richtung ausgerichtet sein.

Das vereinfacht die Lastübertragung.

Auch wenn die Anschlusseinrichtungen in der Fig. 7A zueinander in einer Richtung senkrecht zur jeweiligen axialen Richtung versetzt sind, stimmen die axialen Richtung miteinander überein und verlaufen parallel zur axialen Beabstandung der Bauteile. Allerdings können in der Verbindungsanordnung auch die jeweiligen axialen Richtungen unterschiedlich ausgerichtet sein. Dann bezieht sich die axiale Richtung insbesondere auf die Beabstandungsrichtung der Bauteile. In diesem Fall kann der Verstärkungsabschnitt 502 auch drehbar, beispielsweise um eine Achse senkrecht zur axialen Richtung der Anschlusseinrichtung 2a, einstellbar sein.

Auch ist es möglich, im Verstärkungsabschnitt nur ein gerades Erstreckungselement, beispielsweise das parallel zur axialen Richtung angeordnete Stabelement 502a oder das diagonale Stabelement 502b vorzusehen.

Im vorliegenden Fall erfolgt die Kopplung des Basisabschnitts mittels Form- und Kraftschluss durch die Schraubverbindung über den Öffnungsabschnitt 504. Die Anbringung des Basisabschnitts 501 an dem einen Bauteil muss allerdings nicht über den Öffnungsabschnitt erfolgen. Die Kopplung kann auf zumindest eine Art von Kraft-, Form- und Stoffschluss erfolgen. Umfasst die Anschlusseinrichtung beispielsweise eine Schweißplatte, kann auch der Basisabschnitt mit an dem Bauteil angeschweißt werden. Auch ist zur Anbringung nicht das Verbindungsmittel nötig. Es kann beispielsweise eine einfache Schraube vorgesehen werden. Der Anbringungsabschnitt kann auch zu beiden Seiten des Verstärkungsabschnitts vorgesehen werden, sodass der Verstärkungsabschnitt symmetrisch bezüglich der zwei Anbringungsabschnitte angeordnet ist.

Auch die Kopplung des Verstärkungsabschnitts 502 an den Basisabschnitt kann auf zumindest eine Art von Kraft-, Form- und Stoffschluss erfolgen.

Die Bauteile sind nicht auf Betonteile wie Betonfertigteile beschränkt. Vielmehr können auch Bauteile aus anderen Materialien oder unterschiedlichen Materialien wie Holz und Metall durch das erfindungsgemäße Verbindungsmittel verbunden werden.

Weiterhin wird ein Verfahren zum Anordnen von zumindest zwei Bauteilen vorgesehen, wobei die zumindest zwei Bauteile durch das Verbindungsmittel nach zumindest einem der vorangehenden Aspekte verbunden sind, wobei durch eine Betätigung an der Koppeleinrichtung die Bauteile, vorzugsweise relativ zueinander, bewegt werden, und vorzugsweise nach erfolgter Anordnung zumindest eine der Anschlussvorrichtungen, insbesondere durch Verschrauben an das jeweilige Bauteil, in Bezug auf das jeweilige Bauteil justiert wird.

Durch das erfindungsgemäße Verbindungsmittel können die Bauteile durch Betätigung an der Koppeleinrichtung, also Aufbringen einer Last auf die Koppeleinrichtung im Raum bewegt werden. Ist die Koppeleinrichtung flexibel ausgestaltet, können die Bauteile auch relativ zueinander bewegt werden. Werden beispielsweise die Bauteile aufeinander zubewegt, kann nach erfolgter Anordnung, also in dem finalen Anordnungszustand, durch die Anschlusseinrichtung ein erneutes Verspannen erfolgen. Eine Betätigungseinrichtung zum Bewegen der Bauteile kann beispielsweise hydraulisch, pneumatisch oder elektrisch betrieben werden.

Weiterhin wird bei diesem Verfahren die Betätigung zumindest abschnittsweise im Inneren der Koppeleinrichtung, insbesondere in zumindest einem Hohlraum der Kettenglieder, durchgeführt.

Jedes der oben ausgeführten verfahrensrelevanten Merkmale spezifiziert dieses Verfahren näher.

Die obigen Merkmale können beliebig miteinander kombiniert werden.

Wenn nicht anders durch diese Offenbarung gelehrt, umfasst der Ausdruck "zumindest" auch die jeweilige Gesamtheit.

## Patentansprüche

1. Verbindungsmittel (1, 101, 201, 301) zum Verbinden von zumindest zwei entlang einer axialen Richtung des Verbindungsmittels (1, 101, 201, 301) beabstandeten Bauteilen, insbesondere Betonfertigteile, umfassend:
zumindest zwei Anschlusseinrichtungen (2a, 2b, 102a, 102b, 202a, 202b), über die das Verbindungsmittel (1, 101, 201, 301) jeweils an einem der zumindest zwei Bauteile anbringbar ist, und
eine Koppeleinrichtung (3, 103, 203), die die zumindest zwei Anschlusseinrichtungen (2a, 2b, 102a, 102b, 202a, 202b) zumindest zur Übertragung von Zugkräften aneinander koppelt,
zumindest eine der Anschlusseinrichtungen (2a, 2b, 102a, 102b, 202a, 202b) an einen Kopplungsabschnitt (33, 133, 233) der Koppeleinrichtung (3, 103, 203) zumindest in Bezug auf die axiale Richtung festgelegt gekoppelt ist,
wobei die zumindest eine Anschlusseinrichtung (2a, 2b, 102a, 102b, 202a, 202b) von einer Gewindeeinrichtung (21, 121a, 121b) gebildet wird, die an dem jeweiligen Bauteil verschraubbar ist,
**dadurch gekennzeichnet, dass**
die Koppeleinrichtung (3, 103, 203, 303) zumindest drei Kettenglieder (31, 131, 231, 331) aufweist, wobei ein Kettenglied (31, 131, 231, 331) den Kopplungsabschnitt umfasst, und die Kettenglieder (31, 131, 231, 331) direkt hintereinander geschaltet sind.

2. Verbindungsmittel (1, 101, 201, 301) nach Anspruch 1, wobei die zumindest zwei Anschlusseinrichtungen (2a, 2b, 102a, 102b, 202a, 202b) jeweils an einen Kopplungsabschnitt (33, 133, 233) der Koppeleinrichtung (3, 103, 203) zumindest in Bezug auf die axiale Richtung festgelegt gekoppelt sind.

3. Verbindungsmittel (1, 101, 201, 301) nach Anspruch 1 oder 2,
wobei die zumindest eine Anschlusseinrichtung (2a, 2b, 102a, 102b, 202a, 202b) zumindest zur Anbringung an das jeweilige Bauteil beweglich an den jeweiligen Kopplungsabschnitt (33, 133, 233) gekoppelt ist, vorzugsweise um insbesondere mindestens 90°, nochmals bevorzugt frei, um die axiale Richtung drehbar an den jeweiligen Kopplungsabschnitt (33, 133, 233) gekoppelt ist.

4. Verbindungsmittel (1, 101, 201, 301) nach zumindest einem der vorangehenden Ansprüche, wobei die zumindest zwei Anschlusseinrichtungen eine Gewindeeinrichtung gleicher Gangart, vorzugsweise ein Rechtsgewinde aufweisen, oder
zumindest eine Anschlusseinrichtung (102a) eine Gewindeeinrichtung (121a) mit einem rechtsgängigen Gewinde und zumindest eine andere Anschlusseinrichtung (102b) eine Gewindeeinrichtung (121b) mit einem linksgängigen Gewinde aufweist.

5. Verbindungsmittel (1, 201, 301) nach zumindest einem der vorangehenden Ansprüche, wobei der jeweilige Kopplungsabschnitt einen Öffnungsabschnitt aufweist, der sich vorzugsweise entlang der axialen Richtung erstreckt und durch den zumindest ein Teil der zumindest einen Anschlusseinrichtung (2a, 2b, 202a, 202b), vorzugsweise ein Wellenabschnitt (23) der Gewindeeinrichtung (21), verläuft.

6. Verbindungsmittel (1, 201, 301) nach Anspruch 5, wobei das Verbindungsmittel (1, 201, 301) einen ersten Sperrabschnitt (24), vorzugsweise einen Schraubenkopf, auf einer ersten dem jeweiligen Bauteil bezüglich des Öffnungsabschnitts abgewandten Seite aufweist, der zumindest die Verschiebung der zumindest einen Anschlusseinrichtung (2a, 2b, 202a, 202b) zu dem jeweiligen Bauteil hin unterbindet, und/oder
einen zweiten Sperrabschnitt (25) auf einer zweiten dem jeweiligen Bauteil bezüglich des Öffnungsabschnitts zugewandten Seite aufweist, der zumindest die Verschiebung der zumindest einen Anschlusseinrichtung (2a, 2b, 202a, 202b) von dem jeweiligen Bauteil weg unterbindet,
wobei vorzugsweise der erste (24) und/oder zweite Sperrabschnitt (25) von einem Ansatzabschnitt zur Betätigung der Anschlusseinrichtung (2a, 2b, 202a, 202b) gebildet wird.

7. Verbindungsmittel (1, 101, 301) nach zumindest einem der vorangehenden Ansprüche, wobei
Koppeleinrichtung (3, 103) so ausgestaltet ist, dass die zumindest zwei Anschlusseinrichtungen (2a, 2b, 102a, 102b) relativ zueinander beweglich sind, vorzugsweise die jeweiligen Kopplungsabschnitte (33, 133) zueinander beweglich sind,
insbesondere die Koppeleinrichtung (3, 103) zumindest abschnittsweise druckweich und/oder biegeweich und/oder torsionsweich ausgestaltet ist, und/oder
vorzugsweise die Positionen der zumindest zwei Anschlusseinrichtungen (2a, 2b, 102a, 102b), vorzugsweise der jeweiligen Kopplungsabschnitte (33, 133), zueinander, insbesondere entlang der axialen Richtung beweglich sind, und/oder die Ausrichtungen der beiden Anschlusseinrichtungen (2a, 2b, 102a, 102b), vorzugsweise der jeweiligen Kopplungsabschnitte (33, 133), zueinander veränderlich sind.

8. Verbindungsmittel (1, 101, 201, 301) nach zumindest einem der vorangehenden Ansprüche,
wobei die Koppeleinrichtung (303) zumindest ein reversibel zugängliches Kettenglied (331) umfasst, in das zumindest ein weiteres Kettenglied einkoppelbar ist, bevorzugt ein Karabinerglied aufweist.

9. Verbindungsmittel (1, 101, 201, 301) nach zumindest einem der vorangehenden Ansprüche, wobei das Verbindungsmittel (1, 101, 201, 301) durch Verschrauben der zumindest einen Anschlusseinrichtung (2a, 2b, 102a, 102b, 202a, 202b) an dem jeweiligen Bauteil spannbar ist, und/oder
durch Verschrauben der zumindest einen Anschlusseinrichtung (2a, 2b, 102a, 102b, 202a, 202b) die zumindest zwei Anschlusseinrichtungen, insbesondere die jeweiligen Kopplungsabschnitte (33, 133) voneinander beabstandbar sind, und/oder
das Verbindungsmittel (1, 101, 201, 301) durch voneinander Beabstanden der Anschlusseinrichtungen (2a, 2b, 102a, 102b, 202a, 202b) spannbar ist.

10. Verbindungsmittel (1, 101, 201, 301) nach zumindest einem der vorangehenden Ansprüche, wobei die Koppeleinrichtung (3, 103, 203) eine Kraftmesseinrichtung aufweist, die eine auf die Koppeleinrichtung (3, 103, 203) wirkende Kraft, vorzugsweise eine Zugkraft, messen kann.

11. Verbindungsmittel (1, 101, 201, 301) nach zumindest einem der vorangehenden Ansprüche, wobei das Verbindungsmittel (1, 101, 201, 301) zumindest abschnittsweise, vorzugsweise vollständig aus Metall, nochmals vorzugsweise aus, insbesondere zugfestem, Stahl gefertigt ist.

12. Verbindungsanordnung umfassend:
zumindest zwei Bauteile, vorzugsweise Betonfertigteile; und
das Verbindungsmittel (1, 101, 201, 301) nach zumindest einem der Ansprüche 1 bis 11,
wobei die zumindest eine Anschlusseinrichtung (2a, 102a, 202a) an einem der zumindest zwei Bauteile verschraubt ist, und
die andere Anschlusseinrichtung (2b, 102b, 202b) an dem anderen der zumindest zwei Bauteile angebracht ist, vorzugsweise daran verschraubt ist, und
wobei vorzugsweise
die zumindest zwei Bauteile bis auf das Verbindungsmittel (1, 101, 201, 301) frei beweglich aufeinander gelagert sind.

13. Verfahren zum Anordnen von zumindest zwei Bauteilen,
wobei die zumindest zwei Bauteile durch das Verbindungsmittel (1, 101, 201, 301) nach zumindest einem der Ansprüche 1 bis 11 verbunden sind,
wobei durch eine Betätigung an der Koppeleinrichtung (3, 103, 203) die Bauteile, vorzugsweise relativ zueinander, bewegt werden, und
vorzugsweise nach erfolgter Anordnung zumindest eine der Anschlussvorrichtungen (2a, 2b, 102a, 102b, 202a, 202b), insbesondere durch Verschrauben an das jeweilige Bauteil, in Bezug auf das jeweilige Bauteil justiert wird.

## Claims

1. Connecting means (1, 101, 201, 301) for connecting at least two components, in particular precast concrete parts, spaced apart along an axial direction of the connecting means (1, 101, 201, 301), comprising:
at least two connecting devices (2a, 2b, 102a, 102b, 202a, 202b), via which the connecting means (1, 101, 201, 301) can be attached to one of the at least two components, respectively, and
a coupling device (3, 103, 203) which couples the at least two connecting devices (2a, 2b, 102a, 102b, 202a, 202b) to one another at least for the transmission of tensile forces,
at least one of the connecting devices (2a, 2b, 102a, 102b, 202a, 202b) is coupled to a coupling section (33, 133, 233) of the coupling device (3, 103, 203) so as to be fixed at least with respect to the axial direction,
wherein the at least one connecting device (2a, 2b, 102a, 102b, 202a, 202b) is formed by a threaded device (21, 121a, 121b), which is screwable to the respective component
**characterized in that**
the coupling device (3, 103, 203, 303) comprises at least three chain links (31, 131, 231, 331), wherein one chain link (31, 131, 231, 331) comprises the coupling section, and the chain links (31, 131, 231, 331) are connected directly in series.

2. Connecting means (1, 101, 201, 301) according to claim 1, wherein the at least two connecting devices (2a, 2b, 102a, 102b, 202a, 202b) are each coupled to a coupling section (33, 133, 233) of the coupling device (3, 103, 203) so as to be fixed at least with respect to the axial direction.

3. Connecting means (1, 101, 201, 301) according to claim 1 or 2,
wherein the at least one connecting device (2a, 2b, 102a, 102b, 202a, 202b) is movably coupled to the respective coupling section (33, 133, 233) at least for attachment to the respective component, preferably coupled to the respective coupling section (33, 133, 233) so as to be rotatable about the axial direction, in particular by at least 90°, again preferably freely.

4. Connecting means (1, 101, 201, 301) according to at least one of the preceding claims,
wherein the at least two connecting devices have a threaded device of the same type of pitch, preferably a right-hand thread, or
at least one connecting device (102a) has a threaded device (121a) with a right-hand thread and at least one other connecting device (102b) has a threaded device (121b) with a left-hand thread.

5. Connecting means (1, 201, 301) according to at least one of the preceding claims, wherein the respective coupling section has an opening section which preferably extends along the axial direction and through which at least a part of the at least one connecting device (2a, 2b, 202a, 202b), preferably a shaft section (23) of the threaded device (21), passes.

6. Connecting means (1, 201, 301) according to claim 5, wherein the connecting means (1, 201, 301) has a first lock section (24), preferably a screw head, on a first side facing away from the respective component with respect to the opening section, which at least prevents the displacement of the at least one connecting device (2a, 2b, 202a, 202b) towards the respective component, and/or
has a second lock section (25) on a second side facing the respective component with respect to the opening section, which at least prevents the displacement of the at least one connecting device (2a, 2b, 202a, 202b) away from the respective component,
wherein preferably the first (24) and/or second lock section (25) is formed by a shoulder section for actuating the connecting device (2a, 2b, 202a, 202b).

7. Connecting means (1, 101, 301) according to at least one of the preceding claims, wherein
the coupling device (3, 103) is configured such that the at least two connecting devices (2a, 2b, 102a, 102b) are movable relative to one another, preferably the respective coupling sections (33, 133) are movable relative to one another,
in particular, the coupling device (3, 103) is configured to be soft under pressure and/or soft under bending and/or soft under torsion at least in sections, and/or
preferably the positions of the at least two connecting devices (2a, 2b, 102a, 102b), preferably the respective coupling sections (33, 133), are movable relative to one another, in particular along the axial direction, and/or the alignments of the two connecting devices (2a, 2b, 102a, 102b), preferably the respective coupling sections (33, 133), are changeable relative to one another.

8. Connecting means (1, 101, 201, 301) according to at least one of the preceding claims, wherein the coupling device (303) comprises at least one reversibly accessible chain link (331) into which at least one further chain link can be coupled, preferably has a carabiner link.

9. Connecting means (1, 101, 201, 301) according to at least one of the preceding claims, wherein the connecting means (1, 101, 201, 301) can be tensioned by screwing the at least one connecting device (2a, 2b, 102a, 102b, 202a, 202b) to the respective component, and/or
by screwing the at least one connecting device (2a, 2b, 102a, 102b, 202a, 202b), the at least two connecting devices, in particular the respective coupling sections (33, 133), can be spaced apart, and/or
the connecting means (1, 101, 201, 301) can be tensioned by spacing the connecting devices (2a, 2b, 102a, 102b, 202a, 202b) apart.

10. Connecting means (1, 101, 201, 301) according to at least one of the preceding claims, wherein the coupling device (3, 103, 203) comprises a force measuring device which can measure a force, preferably a tensile force, acting on the coupling device (3, 103, 203).

11. Connecting means (1, 101, 201, 301) according to at least one of the preceding claims, wherein the connecting means (1, 101, 201, 301) is made at least in sections, preferably completely, of metal, again preferably of, in particular tensile-resistant, steel.

12. Connecting assembly comprising:
at least two components, preferably precast concrete components; and
the connecting means (1, 101, 201, 301) according to at least one of claims 1 to 11,
wherein the at least one connecting device (2a, 102a, 202a) is screwed to one of the at least two components, and
the other connecting device (2b, 102b, 202b) is attached to the other of the at least two components, preferably screwed thereto, and
wherein preferably
the at least two components, except for the connecting means (1, 101, 201, 301), are freely movably supported on one another.

13. Method of arranging components,
wherein the at least two components are connected by the connecting means (1, 101, 201, 301) according to at least one of claims 1 to 11,
wherein the components are moved, preferably relative to each other, by an actuation on the coupling device (3, 103, 203), and
preferably after arranging, at least one of the connecting devices (2a, 2b, 102a, 102b, 202a, 202b) is adjusted with respect to the respective component, in particular by screwing it to the respective component.

## Revendications

1. Moyen de liaison (1, 101, 201, 301) pour relier au moins deux composants espacés en direction axiale du moyen de liaison (1, 101, 201, 301), en particulier des composants préfabriqués en béton, comprenant :
au moins deux dispositifs de connexion (2a, 2b, 102a, 102b, 202a, 202b), par l'intermédiaire desquels le moyen de liaison (1, 101, 201, 301) peut être fixé à l'un desdits au moins deux composants respectifs, et
un dispositif d'accouplement (3, 103, 203) qui accouple lesdits au moins deux dispositifs de connexion (2a, 2b, 102a, 102b, 202a, 202b) l'un à l'autre au moins pour la transmission des forces de traction,
dans lequel au moins l'un des dispositifs de connexion (2a, 2b, 102a, 102b, 202a, 202b) est accouplé de manière fixe à une section d'accouplement (33, 133, 233) du dispositif d'accouplement (3, 103, 203) au moins par rapport à la direction axiale,
dans lequel ledit au moins un dispositif de connexion (2a, 2b, 102a, 102b, 202a, 202b) est formé par un dispositif fileté (21, 121a, 121b) qui peut être vissé au composant respectif,
**caractérisé en ce que**
le dispositif d'accouplement (3, 103, 203, 303) comporte au moins trois maillons de chaîne (31, 131, 231, 331), dans lequel un maillon de chaîne (31, 131, 231, 331) comprend la section d'accouplement, et les maillons de chaîne (31, 131, 231, 331) sont reliés directement l'un derrière l'autre.

2. Moyen de liaison (1, 101, 201, 301) selon la revendication 1, dans lequel lesdits au moins deux dispositifs de connexion (2a, 2b, 102a, 102b, 202a, 202b) sont couplés de manière fixe à une section d'accouplement respective (33, 133, 233) du dispositif d'accouplement (3, 103, 203) au moins par rapport à la direction axiale.

3. Moyen de liaison (1, 101, 201, 301) selon la revendication 1 ou 2, dans lequel ledit au moins un dispositif de connexion (2a, 2b, 102a, 102b, 202a, 202b) est couplé de manière mobile à la section d'accouplement respective (33, 133, 233) au moins pour la fixation au composant respectif, et est couplé à la section d'accouplement respective (33, 133, 233) de manière à pouvoir tourner autour de la direction axiale, de préférence en particulier sur au moins 90°, et de préférence encore librement.

4. Moyen de liaison (1, 101, 201, 301) selon au moins l'une des revendications précédentes, dans lequel
lesdits au moins deux dispositifs de connexion comportent un dispositif fileté du même type de pas, de préférence avec pas à droite, ou
au moins un dispositif de connexion (102a) comporte un dispositif fileté (121a) avec pas à droite et au moins un autre dispositif de connexion (102b) comporte un dispositif fileté (121b) avec pas à gauche.

5. Moyen de liaison (1, 201, 301) selon au moins l'une des revendications précédentes, dans lequel la section d'accouplement respective présente une section d'ouverture qui s'étend de préférence en direction axiale, et à travers laquelle passe au moins une partie dudit au moins un dispositif de connexion (2a, 2b, 202a, 202b), de préférence une section d'axe (23) du dispositif fileté (21).

6. Moyen de liaison (1, 201, 301) selon la revendication 5, dans lequel le moyen de liaison (1, 201, 301) comporte
une première section de blocage (24), de préférence une tête de vis, sur un premier côté opposé au composant respectif par rapport à la section d'ouverture, qui empêche au moins le déplacement dudit au moins un dispositif de connexion (2a, 2b, 202a, 202b) vers le composant respectif, et/ou
une deuxième section de blocage (25) sur un deuxième côté faisant face au composant respectif par rapport à la section d'ouverture, qui empêche au moins un déplacement dudit au moins un dispositif de connexion (2a, 2b, 202a, 202b) l'éloignant du composant respectif,
dans lequel de préférence la première section de blocage (24) et/ou la deuxième section de blocage (25) est formée par une section d'extension pour l'actionnement du dispositif de connexion (2a, 2b, 202a, 202b).

7. Moyen de liaison (1, 101, 301) selon au moins l'une des revendications précédentes, dans lequel
le dispositif d'accouplement (3, 103) est conçu de telle sorte que lesdits au moins deux dispositifs de connexion (2a, 2b, 102a, 102b) sont mobiles l'un par rapport à l'autre, et de préférence les sections d'accouplement respectives (33, 133) sont mobiles l'une par rapport à l'autre,
en particulier le dispositif d'accouplement (3, 103) est conçu pour être, au moins par sections, souple à la pression et/ou souple à la flexion et/ou souple à la torsion, et/ou
de préférence les positions desdits au moins deux dispositifs de connexion (2a, 2b, 102a, 102b), de préférence des sections d'accouplement respectives (33, 133), sont mobiles les unes par rapport aux autres, en particulier en direction axiale, et/ou les orientations des deux dispositifs de connexion (2a, 2b, 102a, 102b), de préférence des sections d'accouplement respectives (33, 133), sont variables l'une par rapport à l'autre.

8. Moyen de liaison (1, 101, 201, 301) selon au moins l'une des revendications précédentes,
dans lequel le dispositif d'accouplement (303) comprend au moins un maillon de chaîne (331) accessible de manière réversible en ce qu'au moins un autre maillon de chaîne peut y être couplé, de préférence un maillon de type mousqueton.

9. Moyen de liaison (1, 101, 201, 301) selon au moins l'une des revendications précédentes, dans lequel
le moyen de liaison (1, 101, 201, 301) peut être mis en tension par vissage dudit au moins un dispositif de connexion (2a, 2b, 102a, 102b, 202a, 202b) au composant respectif, et/ou
lesdits au moins deux dispositifs de connexion, en particulier lesdites sections d'accouplement respectives (33, 133), peuvent être espacés entre eux par vissage dudit au moins un dispositif de connexion (2a, 2b, 102a, 102b, 202a, 202b), et/ou
le moyen de liaison (1, 101, 201, 301) peut être mis en tension en espaçant les dispositifs de connexion (2a, 2b, 102a, 102b, 202a, 202b) les uns des autres.

10. Moyen de liaison (1, 101, 201, 301) selon au moins l'une des revendications précédentes, dans lequel le dispositif d'accouplement (3, 103, 203) comporte un dispositif de mesure de force qui peut mesurer une force agissant sur le dispositif d'accouplement (3, 103, 203), de préférence une force de traction.

11. Moyen de liaison (1, 101, 201, 301) selon au moins l'une des revendications précédentes, dans lequel le moyen de liaison (1, 101, 201, 301) est réalisé au moins par sections, et de préférence entièrement, en métal, de préférence encore en acier, en particulier en acier à haute résistance à la traction.

12. Dispositif de liaison comprenant :
au moins deux composants, de préférence des composants préfabriqués en béton ; et
le moyen de liaison (1, 101, 201, 301) selon au moins l'une des revendications 1 à 11,
dans lequel ledit au moins un dispositif de connexion (2a, 102a, 202a) est vissé à l'un desdits au moins deux composants, et
ledit autre dispositif de connexion (2b, 102b, 202b) est fixé à l'autre desdits au moins deux composants, et y est de préférence vissé, et
dans lequel de préférence lesdits au moins deux composants sont montés l'un sur l'autre de manière librement mobile jusqu'au moyen de liaison (1, 101, 201, 301).

13. Procédé d'agencement d'au moins deux composants,
dans lequel lesdits au moins deux composants sont reliés par le moyen de liaison (1, 101, 201, 301) selon au moins l'une des revendications 1 à 11,
dans lequel les composants sont déplacés, de préférence les uns par rapport aux autres, par un actionnement du dispositif d'accouplement (3, 103, 203), et
de préférence, après que l'agencement est achevé correctement, au moins l'un des dispositifs de connexion (2a, 2b, 102a, 102b, 202a, 202b) est réglé par rapport au composant respectif, en particulier en le vissant au composant respectif.
